(19) Europäisches Patentamt / European Patent Office / Office européen des brevets

(11) **EP 3 247 984 B1**

(12) **EUROPÄISCHE PATENTSCHRIFT**

(45) Veröffentlichungstag und Bekanntmachung des Hinweises auf die Patenterteilung:
**27.02.2019 Patentblatt 2019/09**

(21) Anmeldenummer: **16703922.1**

(22) Anmeldetag: **20.01.2016**

(51) Int Cl.:
*G01K 1/16* *(2006.01)*     *G01K 17/06* *(2006.01)*

(86) Internationale Anmeldenummer:
**PCT/EP2016/051075**

(87) Internationale Veröffentlichungsnummer:
**WO 2016/116481 (28.07.2016 Gazette 2016/30)**

(54) **VORRICHTUNG UND VERFAHREN ZUR TEMPERATURERFASSUNG SOWIE VERWENDUNG DER VORRICHTUNG**

DEVICE AND METHOD FOR SENSING TEMPERATURE, AS WELL AS USE OF THE DEVICE

DISPOSITIF ET PROCÉDÉ DE DÉTECTION DE TEMPERATURE, AINSI QUE L'UTILISATION DU DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.01.2015 DE 102015201155**

(43) Veröffentlichungstag der Anmeldung:
**29.11.2017 Patentblatt 2017/48**

(73) Patentinhaber: QUNDIS GmbH
**99098 Erfurt (DE)**

(72) Erfinder: **KUHN, Jens**
**98693 Ilmenau (DE)**

(74) Vertreter: **Liedtke, Markus**
**Liedtke & Partner**
**Patentanwälte**
**Gerhart-Hauptmann-Straße 10/11**
**99096 Erfurt (DE)**

(56) Entgegenhaltungen:
**JP-A- 2013 210 325**

**Beschreibung**

Die Erfindung betrifft eine Vorrichtung zur Temperaturerfassung nach den Merkmalen des Oberbegriffs des Anspruchs 1, ein Verfahren zur Temperaturerfassung und eine Verwendung der Vorrichtung.

Aus dem Stand der Technik sind, wie in der DE 199 39 757 A1 beschrieben, ein Verfahren und ein Temperaturfühler zur Medientemperaturerfassung mit Einbautemperaturfühlern bekannt, bei dem mit in einem Schutzrohr angeordneten Sensoren die Temperatur gemessen wird und die zugehörigen Messwertsignale über ein elektrisches Anschlussteil nach außen geführt werden. Die Temperatur wird an mehreren Messstellen mit verschiedenen Sensoren im Schutzrohr des Thermometers ermittelt, wobei die verschiedenen Sensoren eine von den jeweiligen anderen Messstellen unabhängige Wärmeübergangs- und/oder Wärmeleitcharakteristik aufweisen. Die Messwerte werden einzeln zu einer im Temperaturfühler enthaltenen elektronischen Auswerteeinheit geführt, in der aus den einzelnen Messwerten unter Berücksichtigung der Kennwerte des Thermometers der wahre Temperaturwert ermittelt wird.

In der JP 2013-210325 wird eine Vorrichtung zur Temperaturerfassung einer Temperatur einer Wärmequelle beschrieben, welche vier Temperatursensoren und zwei unterschiedliche Wärmeübertragungsstrecken mit bekannten Wärmewiderständen zwischen jeweils zwei dieser Temperatursensoren aufweist.

Der Erfindung liegt die Aufgabe zu Grunde, eine gegenüber dem Stand der Technik verbesserte Vorrichtung zur Temperaturerfassung, ein gegenüber dem Stand der Technik verbessertes Verfahren zur Temperaturerfassung und eine Verwendung der Vorrichtung anzugeben.

Die Aufgabe wird erfindungsgemäß gelöst durch eine Vorrichtung zur Temperaturerfassung mit den Merkmalen des Anspruchs 1, ein Verfahren zur Temperaturerfassung mit den Merkmalen des Anspruchs 5 und eine Verwendung der Vorrichtung mit den Merkmalen des Anspruchs 9 oder 10.

Vorteilhafte Ausgestaltungen der Erfindung sind Gegenstand der Unteransprüche.

Eine erfindungsgemäße Vorrichtung zur Temperaturerfassung umfasst zumindest einen ersten Temperatursensor und einen zweiten Temperatursensor. Der erste Temperatursensor ist mit einer Wärmequelle, deren Temperatur zu ermitteln ist, thermisch koppelbar. Dabei ist unter dem Begriff Wärmequelle ein Medium mit einer gegenüber dem Referenzmedium erhöhten Referenztemperatur zu verstehen. Der Wärmestrom erfolgt zwischen der Wärmequelle und dem Referenzmedium. Sinngemäß gelten die folgenden Ausführungen selbstverständlich auch für die Situation, in der das zu untersuchende Medium eine gegenüber dem Referenzmedium niedrigere Temperatur aufweist. In diesem Fall ändert sich nur die Richtung des Wärmestromes und die "Wärmequelle" wird zu einer "Wärmesenke", die Wärme aus der Umgebung aufnimmt.

Beispielsweise bildet bei einer in einem übergeordneten Messgerät, zum Beispiel in einem Heizkostenverteiler, angeordneten Vorrichtung das Innere des Messgerätes das Referenzmedium und die Temperatur im Inneren des Messgerätes bildet somit die Referenztemperatur. Bei einem Heizkostenverteiler erfolgt ein Wärmestrom zwischen einem Heizkörper, an welchem der Heizkostenverteiler angeordnet ist, und dem Inneren des Heizkostenverteilers, und ein weiterer Wärmestrom zwischen dem Inneren des Heizkostenverteilers und der Raumluft eines Raumes, in welchem der Heizkostenverteiler angeordnet ist.

In einer erfindungsgemäßen Ausführungsform umfasst die Vorrichtung eine variable Wärmeübertragungsstrecke mit einem veränderbaren Wärmewiderstand, über welche der zweite Temperatursensor mit dem ersten Temperatursensor thermisch koppelbar oder gekoppelt ist und über diesen ersten Temperatursensor mit der Wärmequelle thermisch koppelbar oder gekoppelt ist. D. h. wenn der erste Temperatursensor mit der Wärmequelle thermisch gekoppelt ist und der zweite Temperatursensor über die variable Wärmeübertragungsstrecke mit dem ersten Temperatursensor thermisch gekoppelt ist, so ist der zweite Temperatursensor über den ersten Temperatursensor ebenfalls mit der Wärmequelle thermisch gekoppelt. Somit ist der zweite Temperatursensor nicht direkt mit der Wärmequelle thermisch gekoppelt, sondern er ist über den ersten Temperatursensor mit der Wärmequelle gekoppelt und somit mit demselben Punkt oder Bereich der Wärmequelle wie der erste Temperatursensor.

Beispielsweise ist der Wärmewiderstand der variablen Wärmeübertragungsstrecke zwischen mindestens zwei Werten einstellbar, zum Beispiel mittels eines elektronischen Potentiometers oder auf andere Weise. Zum Beispiel kann man einen elektronischen Umschalter in einer atypischen Verwendung als elektronisch veränderbare Wärmeübertragungsstrecke verwenden. Dazu wird der Umschalter mit parallel geschalteten Ausgängen zwischen den Temperatursensoren angeordnet. Durch Ein- und Ausschalten der Betriebsspannung des Umschalters lässt sich sein Wärmewiderstand elektronisch steuern. Die variable Wärmeübertragungsstrecke ist dann zweckmäßigerweise aus einem Material ausgebildet, welches seinen Wärmewiderstand durch Anlegen verschiedener Spannungen ändert, oder wirkt zweckmäßigerweise wie aus einem Material ausgebildet, welches seinen Wärmewiderstand durch Anlegen verschiedener Spannungen ändert.

In einer weiteren erfindungsgemäßen Ausführungsform umfasst die Vorrichtung eine erste Wärmeübertragungsstrecke zur thermischen Kopplung des zweiten Temperatursensors mit dem ersten Temperatursensor, welche einen ersten Wärmewiderstand aufweist, und eine zweite Wärmeübertragungsstrecke zur thermischen Kopplung des zweiten Temperatursensors mit dem ersten Temperatursensor, welche einen von dem ersten Wärmewiderstand verschiedenen zweiten Wärmewiderstand aufweist, sowie eine Umschalteinheit zum Umschalten zwischen der ersten Wärmeübertragungsstrecke und der zweiten Wärmeübertragungsstrecke. Auf diese Weise ist der zweite Temperatursensor über die erste Wärmeübertragungsstrecke oder über die zweite Wärmeübertragungsstrecke mit dem ersten Temperatursensor thermisch koppelbar oder gekoppelt und über diesen ersten Temperatursensor mit der Wärmequelle thermisch koppelbar oder gekoppelt. D. h. wenn der erste Temperatursensor mit der Wärmequelle thermisch gekoppelt ist und der zweite Temperatursensor entweder über die erste Wärmeübertragungsstrecke oder über die zweite Wärmeübertragungsstrecke mit dem ersten Temperatursensor thermisch gekoppelt ist, so ist der zweite Temperatursensor über den ersten Temperatursensor ebenfalls mit der Wärmequelle thermisch gekoppelt.

Beide erfindungsgemäßen Ausführungsformen der Vorrichtung ermöglichen somit in erfindungswesentlicher Weise eine Veränderung des Wärmeflusses zwischen den Temperatursensoren, in der ersten Ausführungsform durch Veränderung der variablen Wärmeübertragungsstrecke und in der zweiten Ausführungsform durch Umschalten zwischen den Wärmeübertragungsstrecken. Erst dadurch wird mittels der Vorrichtung die Durchführung des unten beschriebenen Verfahrens ermöglicht. Die Anzahl der Wärmeübertragungsstrecken und Temperatursensoren ist dabei von untergeordneter Bedeutung, wichtig ist die Möglichkeit der Veränderung des Wärmeflusses zwischen den Temperatursensoren, d. h. zwischen ein und demselben Temperatursensorpaar. Es sind daher mehrere Temperatursensoren erforderlich, d. h. mindestens zwei Temperatursensoren, und mindestens zwei Wärmeübertragungsstrecken oder mindestens eine variable Wärmeübertragungsstrecke zwischen den Temperatursensoren, d. h. zwischen einem Temperatursensorpaar, gemäß den oben beschriebenen erfindungsgemäßen Ausführungsformen der Vorrichtung, um den Wärmefluss zwischen dem Temperatursensorpaar verändern zu können.

Bei aus dem Stand der Technik bekannten Vorrichtungen zur Temperaturerfassung besteht das allgemeine Problem, dass die vom jeweiligen verwendeten Temperatursensor jeweils erfasste Temperatur nicht einer wirklichen Temperatur der Wärmequelle entspricht, d. h. die Temperaturerfassung weist Messfehler auf, zum Beispiel verursacht durch den jeweiligen Sensor selbst und/oder durch dessen Einbauposition, beispielsweise in einer Tauchhülse, so dass eine Erfassung der korrekten Temperatur nicht möglich ist. Mittels der erfindungsgemäßen Vorrichtung wird dieses Problem gelöst und es kann die korrekte Temperatur, d. h. die wahre Temperatur, der Wärmequelle ermittelt werden.

Diese Ermittlung der korrekten Temperatur der Wärmequelle erfolgt mittels der erfindungsgemäßen Vorrichtung in einem erfindungsgemäßen Verfahren zur Temperaturerfassung, wobei der erste Temperatursensor mit der Wärmequelle, deren Temperatur zu ermitteln ist, thermisch gekoppelt ist. In diesem erfindungsgemäßen Verfahren wird mit unterschiedlichen Wärmewiderständen zwischen dem ersten Temperatursensor und dem zweiten Temperatursensor jeweils ein Temperaturwert der Wärmequelle mittels des ersten Temperatursensors und mittels des zweiten Temperatursensors erfasst und aus den erfassten Temperaturwerten eine Temperatur der Wärmequelle, d. h. die korrekte Temperatur der Wärmequelle, berechnet.

Für das erfindungsgemäße Verfahren wird vorteilhafterweise keine konstante Referenztemperatur benötigt, denn die Berechnung der Quelltemperatur, d. h. die korrekte Temperatur der Wärmequelle, erfolgt vorteilhafterweise nur aus den sich durch die gezielte Veränderung des Wärmeflusses einstellenden Temperaturen (wobei für die Berechnung die bekannten Wärmewiderstände der Wärmeübertragungsstrecken bzw. der variablen Wärmeübertragungsstrecke verwendet werden).

Diese Temperatur der Wärmequelle wird zweckmäßigerweise gemäß folgender Gleichung berechnet:

$$T_x = \frac{T_1 * \Delta T'_{12} * R_a - T'_1 * \Delta T_{12} * R_b}{\Delta T'_{12} * R_a - \Delta T_{12} * R_b} \qquad [1]$$

Dabei ist $R_a$ der erste Wärmewiderstand und $R_b$ der zweite Wärmewiderstand, wobei die Größe dieser beiden Wärmewiderstände bekannt ist. $T_x$ ist die Temperatur der Wärmequelle, die zu berechnen ist. $T_1$ ist der mittels des ersten Temperatursensors erfasste Temperaturwert mit dem ersten Wärmewiderstand zwischen dem ersten Temperatursensor und dem zweiten Temperatursensor, $T'_1$ ist der mittels des ersten Temperatursensors erfasste Temperaturwert mit dem vom ersten Wärmewiderstand verschiedenen zweiten Wärmewiderstand zwischen dem ersten Temperatursensor und dem zweiten Temperatursensor. Die unterschiedlichen Wärmewiderstände haben auch einen Einfluss auf die Temperaturerfassung mittels des ersten Temperatursensors, da die Wärmeableitung vom ersten Temperatursensor auf den zweiten Temperatursensor abhängig ist vom jeweiligen Wärmewiderstand, so dass auch der erste Temperatursensor mit den unterschiedlichen Wärmewiderständen zwischen den Temperatursensoren unterschiedliche Temperaturwerte erfasst. $\Delta T_{12}$ ist die Differenz der mittels der beiden Temperatursensoren erfassten Temperaturwerte mit dem ersten Wärmewiderstand zwischen dem ersten Temperatursensor und dem zweiten Temperatursensor und $\Delta T'_{12}$ ist die Differenz der mittels der beiden Temperatursensoren erfassten Temperaturwerte mit dem vom ersten Wärmewiderstand verschiedenen zweiten Wärmewiderstand zwischen dem ersten Temperatursensor und dem zweiten Temperatursensor.

Die Vorrichtung und das Verfahren sind somit vorteilhaft verwendbar bei allen Temperaturmessungen, bei denen aufgrund eines jeweiligen Temperaturfühleraufbaus mit unerwünschten Einbautemperaturmessfehlern zu rechnen ist, beispielsweise bei Wärmemengenmessern und Heizkostenverteilern. Mittels der Vorrichtung ist die korrekte Grenzflächentemperatur zum zu untersuchenden Medium zu ermitteln. Die "wahre" jeweilige Prozesstemperatur, d. h. die mittlere Temperatur des zu untersuchenden Mediums, wird sich im Allgemeinen jedoch, je nachdem welche Strömungsverhältnisse vorliegen, von dieser Grenzflächentemperatur unterscheiden. Für typische Strömungsverhältnisse lassen sich jedoch im Allgemeinen recht genaue Abschätzungen für die wahre Prozesstemperatur auf der Basis der bekannten Grenzflächentemperatur vornehmen. Daher kann die Vorrichtung und zweckmäßigerweise auch das Verfahren vorteilhafterweise in einem Heizkostenverteiler und/oder in einem Wärmemengenmesser verwendet werden. Werden mittels des Heizkostenverteilers oder Wärmemengenmessers Temperaturen mehrerer Messstellen gemessen, bei einem elektronischen Heizkostenverteiler beispielsweise eine Temperatur eines Heizkörpers, an welchem der elektronische Heizkostenverteiler angeordnet ist, und eine Raumlufttemperatur eines Raumes, in welchem der Heizkörper und somit der elektronische Heizkostenverteiler angeordnet sind, so ist zweckmäßigerweise für jede Temperaturmessstelle jeweils eine solche Vorrichtung vorgesehen, d. h. der beschriebene elektronische Heizkostenverteiler weist dann zweckmäßigerweise zwei derartige Vorrichtungen auf, um die wahre Heizkörpertemperatur und die wahre Raumlufttemperatur zu messen.

Die Vorrichtung und das Verfahren ermöglichen beispielsweise bei einem elektronischen Heizkostenverteiler eine Plausibilitätsprüfung von jeweils verwendeten Korrekturfaktoren, auch als Kc-Werte bezeichnet, zum Beispiel zur Kontrolle einer korrekten Identifizierung eines vorliegenden Heizkörpermodells, und/oder eine Kontrolle einer korrekten Montage des elektronischen Heizkostenverteilers, jeweils durch einen Vergleich der mittels der Vorrichtung ermittelten Kc-Werte mit den im elektronischen Heizkostenverteiler gespeicherten Kc-Werten, und/oder eine Ermittlung eines Korrekturfaktorwertes bei einem unbekannten Heizkörper.

Bei einem Wärmemengenmesser kann die Vorrichtung und das Verfahren beispielsweise verwendet werden, um einen Einbautemperaturfehler bei einem Einsatz zumindest eines Temperaturfühlers in einer Schutzhülse zu korrigieren.

Vorteilhafterweise ist bei der zweiten oben beschriebenen erfindungsgemäßen Ausführungsform die erste Wärmeübertragungsstrecke aus einem anderen Material oder einer anderen Materialkombination ausgebildet als die zweite Wärmeübertragungsstrecke, d. h. die erste Wärmeübertragungsstrecke ist vorteilhafterweise aus einem Material ausgebildet, welches einen anderen Wärmewiderstand aufweist als das Material der zweiten Wärmeübertragungsstrecke. Beispielsweise ist eine der Wärmeübertragungsstrecken aus Kupfer, Silber, Gold und/oder einer Legierung daraus ausgebildet. Diese Wärmeübertragungsstrecke weist somit einen hohen Wärmeleitwert und daher einen geringen Wärmewiderstand auf. Die andere Wärmeübertragungsstrecke ist beispielsweise aus Nickel, Chrom und/oder Eisen und/oder einer Legierung daraus ausgebildet. Diese Wärmeübertragungsstrecke weist somit einen geringen Wärmeleitwert und daher einen hohen Wärmewiderstand auf.

Vorteilhafterweise werden die Materialien für die Wärmeübertragungsstrecken derart gewählt, dass, sinnvollerweise unter Berücksichtigung technischer und wirtschaftlicher Gesichtspunkte, ein möglichst großer Unterschied der Wärmewiderstände der beiden Wärmeübertragungsstrecken besteht. Dabei ist natürlich zu berücksichtigen, dass insbesondere bei der Wärmeübertragungsstrecke mit dem hohen Wärmewiderstand dieser Wärmewiderstand nicht so hoch sein darf, dass die Wärmeleitung über diese Wärmeübertragungsstrecke so schlecht wird, dass die thermische Anbindung des zweiten Temperatursensors an die zu ermittelnde Temperatur deutlich schlechter als an die Referenztemperatur wird und damit keine auswertbare Temperaturdifferenz ermittelt werden kann.

Alternativ oder zusätzlich weisen die erste und die zweite Wärmeübertragungsstrecke vorteilhafterweise eine voneinander abweichende Länge und/oder eine voneinander abweichende Breite und/oder eine voneinander abweichende Dicke und/oder eine voneinander abweichende Oberflächenstruktur und/oder eine voneinander abweichende Topologie auf. Unter Topologie ist hierbei ein Verlegemuster der betreffenden Wärmeübertragungsstrecke, beispielsweise auf einer Leiterplatte, zu verstehen. Je größer die Länge und/oder je geringer die Breite und/oder die Dicke der jeweiligen Wärmeübertragungsstrecke ist, desto geringer ist ihre Wärmeleitfähigkeit, d. h. desto höher ist ihr Wärmewiderstand. Die Topologie hat dabei ebenfalls einen Einfluss auf die Länge der jeweiligen Wärmeübertragungsstrecke. Beispielsweise ist die Wärmeübertragungsstrecke besonders lang, wenn sie mäanderförmig zwischen zwei Punkten mit einem vorgegebenen Abstand verlegt ist, und weist dann eine geringere Wärmeleitfähigkeit und somit einen höheren Wärmewiderstand auf als eine Wärmeübertragungsstrecke, welche in direkter gerader Linie zwischen diesen beiden Punkten verlegt ist und somit kürzer ist. Somit ist die Wärmeübertragungsstrecke, welche den kleineren Wärmewiderstand aufweist, beispielsweise besonders kurz, dick und/oder breit und/oder geradlinig ausgebildet, während die Wärmeübertragungsstrecke, welche den großen Wärmewiderstand aufweist, beispielsweise besonders lang, dünn und/oder schmal und/oder beispielsweise mäanderförmig ausgebildet ist.

Es bestehen somit eine Vielzahl von Möglichkeiten zur Ausbildung der Wärmeübertragungsstrecken mit voneinander abweichenden Wärmewiderständen, so dass eine optimale Kombination beispielsweise aus Materialien und/oder Legierungen und/oder Schichtsystemen und/oder Verlegemöglichkeiten ausgewählt werden kann, um die Ausbildung der Wärmeübertragungsstrecken technisch und insbesondere auch wirtschaftlich optimiert zu realisieren.

Zweckmäßigerweise ist ein elektrischer Anschluss zumindest eines elektrischen Sensorkontaktes zumindest eines der Temperatursensoren derart ausgebildet, dass der jeweilige Temperatursensor von anderen Wärmequellen thermisch entkoppelt ist. Auf diese Weise ist sichergestellt, dass Einflüsse anderer, von der zu messenden Wärmequelle verschiedener, Wärmequellen ausgeschlossen oder zumindest auf ein Minimum reduziert sind. Vorzugsweise sind die elektrischen Anschlüsse aller Sensorkontakte der Temperatursensoren derart ausgebildet. Dabei bedeutet der Begriff thermische Entkopplung, dass die elektrischen Anschlüsse derart ausgebildet sind, dass die thermische Kopplung der Temperatursensoren zu anderen Wärmequellen um ein Vielfaches geringer ist als zur zu messenden Wärmequelle. Diese thermische Kopplung ist zweckmäßigerweise so stark reduziert, wie es unter technischen und/oder wirtschaftlichen Gesichtspunkten realisierbar ist.

Eine andere Wärmequelle, von der die Temperatursensoren auf diese Weise thermisch entkoppelt sind, ist insbesondere das Referenzmedium mit dessen Referenztemperatur. Ist die Vorrichtung in einem übergeordneten Messgerät, beispielsweise einem Heizkostenverteiler, angeordnet, so sind die elektrischen Anschlüsse vorzugsweise aller Sensorkontakte beider Temperatursensoren derart ausgebildet, dass die Temperatursensoren möglichst gut von dieser Referenztemperatur im Inneren des übergeordneten Messgerätes, beispielsweise des Heizkostenverteilers, thermisch entkoppelt sind.

Für die Ausbildung des zumindest einen elektrischen Anschlusses oder vorzugsweise aller elektrischen Anschlüsse gelten die oben zu den Wärmeübertragungsstrecken beschriebenen Prinzipien. D. h. der zumindest eine elektrische Anschluss oder vorteilhafterweise alle elektrischen Anschlüsse weist/weisen beispielsweise eine möglichst große Länge und/oder eine möglichst geringe Breite und/oder Dicke auf, um die Wärmeleitfähigkeit auf ein Minimum zu reduzieren. D. h. insbesondere eine Topologie ist derart ausgebildet, dass der jeweilige elektrische Anschluss eine möglichst geringe Wärmeleitfähigkeit aufweist und dadurch eine wirksame thermische Entkopplung des jeweiligen Temperatursensors insbesondere gegenüber der Referenztemperatur sichergestellt ist. Beispielsweise ist der jeweilige elektrische Anschluss als eine mäanderförmige Anschlussleitung ausgebildet, um auf diese Weise eine große Länge des jeweiligen elektrischen Anschlusses zu erreichen. Alternativ oder zusätzlich ist der jeweilige elektrische Anschluss zweckmäßigerweise aus einem Material oder aus einer Materialkombination mit einer möglichst geringen Wärmeleitfähigkeit ausgebildet, wobei natürlich nur solche Materialien oder Materialkombinationen verwendbar sind, welche eine ausreichende elektrische Leitfähigkeit ermöglichen.

Mittels der oben genannten ersten erfindungsgemäßen Ausführungsform der Vorrichtung wird im Verfahren ein Temperaturwert der Wärmequelle mittels des ersten Temperatursensors und mittels des zweiten Temperatursensors erfasst. Danach wird der Wärmewiderstand der variablen Wärmeübertragungsstrecke verändert und es wird erneut ein Temperaturwert der Wärmequelle mittels des ersten Temperatursensors und mittels des zweiten Temperatursensors erfasst. Die beiden verwendeten Wärmewiderstände sind bekannt, so dass mittels der oben beschriebenen Gleichung [1] die korrekte Temperatur der Wärmequelle, d. h. deren wahre Temperatur, ermittelt werden kann.

Mittels der oben genannten zweiten erfindungsgemäßen Ausführungsform der Vorrichtung wird im Verfahren ein Temperaturwert der Wärmequelle mittels des ersten Temperatursensors und mittels des zweiten Temperatursensors erfasst, wobei die beiden Temperatursensoren über die erste Wärmeübertragungsstrecke miteinander thermisch gekoppelt sind. Des Weiteren wird ein Temperaturwert der Wärmequelle mittels des ersten Temperatursensors und mittels des zweiten Temperatursensors erfasst, wobei die beiden Temperatursensoren über die zweite Wärmeübertragungsstrecke miteinander thermisch gekoppelt sind. Zweckmäßigerweise wird mittels der Umschalteinheit zwischen den Wärmeübertragungsstrecken umgeschaltet, um sowohl einen Temperaturwert der Wärmequelle mittels des ersten Temperatursensors und mittels des zweiten Temperatursensors zu erfassen, wenn die beiden Temperatursensoren über die erste Wärmeübertragungsstrecke miteinander thermisch gekoppelt sind, als auch einen Temperaturwert der Wärmequelle mittels des ersten Temperatursensors und mittels des zweiten Temperatursensors zu erfassen, wenn die beiden Temperatursensoren über die zweite Wärmeübertragungsstrecke miteinander thermisch gekoppelt sind. D. h. es werden beispielsweise zunächst die beiden Temperatursensoren mittels der Umschalteinheit über die erste Wärmeübertragungsstrecke thermisch gekoppelt. Dann wird zunächst ein Temperaturwert der Wärmequelle mittels des ersten Temperatursensors und mittels des zweiten Temperatursensors erfasst. Danach wird mittels der Umschalteinheit zwischen den Wärmeübertragungsstrecken umgeschaltet, so dass die beiden Temperatursensoren nun über die zweite Wärmeübertragungsstrecke thermisch miteinander gekoppelt sind, und es wird erneut ein Temperaturwert der Wärmequelle mittels des ersten Temperatursensors und mittels des zweiten Temperatursensors erfasst. Auch die umgekehrte Vorgehensweise ist möglich, so dass die beiden Temperatursensoren zuerst über die zweite Wärmeleitstrecke und danach über die erste Wärmeleitstrecke thermisch miteinander gekoppelt sind. Nachdem die Temperaturwerte auf die geschilderte Weise erfasst wurden, wird mittels der oben beschriebenen Gleichung [1], den erfassten Temperaturwerten und den bekannten Wärmewiderständen der beiden Wärmeübertragungstrecken die wahre Temperatur der Wärmequelle ermittelt.

D. h. mittels der oben beschriebenen zweiten erfindungsgemäßen Ausführungsform der Vorrichtung, genauer gesagt mittels deren beider Temperatursensoren und den zwei Wärmeübertragungsstrecken mit unterschiedlichen bekannten Wärmewiderständen zwischen den Temperatursensoren und einer Umschalteinheit, welche zweckmäßigerweise mittels einer Steuerungseinheit, beispielsweise mittels einer Steuerlogik, gesteuert wird, kann eine Quelltemperatur eines Wärmeflusses ermittelt werden, d. h. die korrekte, wahre Temperatur der Wärmequelle. Die Steuerlogik, welche beispielsweise als ein Mikrokontroller ausgebildet ist, aktiviert zunächst die erste bekannte Wärmeübertragungsstrecke zwischen den beiden Temperatursensoren, welche den ersten bekannten Wärmewiderstand aufweist, und es werden die Temperaturwerte der beiden Temperatursensoren erfasst. Anschließend wird mittels der Umschalteinheit, gesteuert durch die Steuerlogik, beispielsweise durch den Mikrokontroller, die zweite bekannte Wärmeübertragungsstrecke zwischen den beiden Temperatursensoren aktiviert, die den zweiten bekannten Wärmewiderstand aufweist. Es werden nun wieder die Temperaturwerte der beiden Temperatursensoren erfasst. Auch die umgekehrte Vorgehensweise bezüglich der ersten und zweiten Wärmeübertragungsstrecke ist möglich. Aus den erfassten Temperaturwerten und den bekannten Wärmewiderständen wird nun gemäß der obigen Gleichung [1] die unbekannte Quell- bzw. Senkentemperatur berechnet, d. h. die wahre Grenzflächentemperatur der Wärmequelle bzw. Wärmesenke.

Ausführungsbeispiele der Erfindung werden im Folgenden anhand von Zeichnungen näher erläutert.

Darin zeigen:

Figur 1    eine schematische Prinzipdarstellung einer Vorrichtung zur Temperaturerfassung,

Figur 2    schematisch eine Ausführungsform einer Vorrichtung zur Temperaturerfassung, und

Figur 3    schematisch ein Schaltbild einer Vorrichtung zur Temperaturerfassung.

Einander entsprechende Teile sind in allen Figuren mit den gleichen Bezugszeichen versehen.

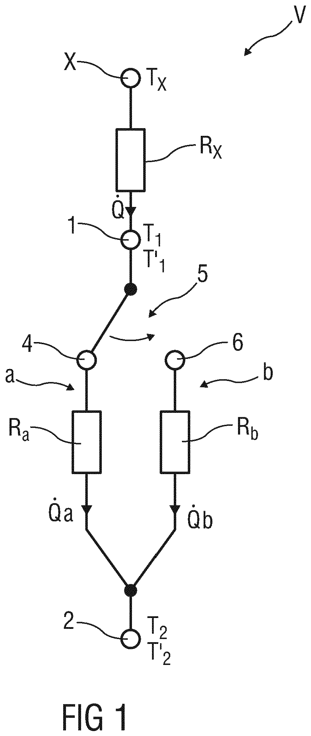

Figur 1 zeigt eine schematische Prinzipdarstellung einer Vorrichtung V zur Temperaturerfassung. Im dargestellten Beispiel umfasst die Vorrichtung V einen ersten Temperatursensor 1 und einen zweiten Temperatursensor 2. Der erste Temperatursensor 1 ist mit einer Wärmequelle x, deren Temperatur zu ermitteln ist, thermisch gekoppelt. Mittels der Vorrichtung V und mittels eines im Folgenden näher beschriebenen Verfahrens wird eine wahre Temperatur $T_x$ der Wärmequelle x ermittelt. Diese Temperatur $T_x$ der Wärmequelle x ist die Grenzflächentemperatur zum zu untersuchenden Medium, beispielsweise die Grenzflächentemperatur eines Heizkörpers. Die jeweilige Prozesstemperatur, d. h. die mittlere Temperatur des zu untersuchenden Mediums, beispielsweise des Heizungswassers im Heizkörper, wird sich im Allgemeinen jedoch, je nachdem welche Strömungsverhältnisse vorliegen, von dieser Grenzflächentemperatur unterscheiden. Für typische Strömungsverhältnisse lassen sich jedoch im Allgemeinen recht genaue Abschätzungen für die wahre Prozesstemperatur auf der Basis der ermittelten Grenzflächentemperatur vornehmen.

Alternativ zur Wärmequelle x kann die Vorrichtung V auch mit einer Wärmesenke, deren Temperatur zu ermitteln ist, thermisch gekoppelt sein, da die wahre Temperatur der Wärmesenke ebenso mit der Vorrichtung V und dem Verfahren ermittelt werden kann.

Die Vorrichtung V umfasst des Weiteren eine erste Wärmeübertragungsstrecke a zur thermischen Kopplung des zweiten Temperatursensors 2 mit dem ersten Temperatursensor 1, welche einen ersten Wärmewiderstand $R_a$ aufweist. Zudem umfasst die Vorrichtung V eine zweite Wärmeübertragungsstrecke b zur thermischen Kopplung des zweiten Temperatursensors 2 mit dem ersten Temperatursensor 1, welche einen von dem ersten Wärmewiderstand $R_a$ verschiedenen zweiten Wärmewiderstand $R_b$ aufweist. Die Wärmewiderstände $R_a$, $R_b$, genauer gesagt deren jeweilige Größen, sind bekannt.

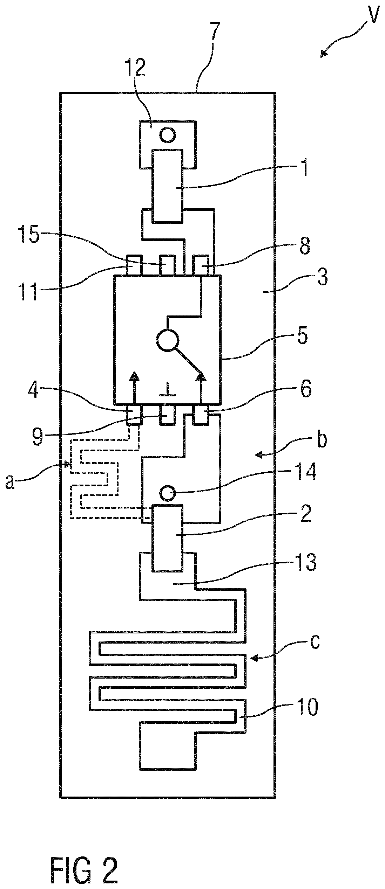

Die erste Wärmeübertragungsstrecke a ist beispielsweise aus einem anderen Material ausgebildet als die zweite Wärmeübertragungsstrecke b, d. h. die erste Wärmeübertragungsstrecke a ist dann aus einem Material ausgebildet, welches einen anderen Wärmewiderstand aufweist als das Material der zweiten Wärmeübertragungsstrecke b. Alternativ oder zusätzlich weisen die erste Wärmeübertragungsstrecke a und die zweite Wärmeübertragungsstrecke b beispielsweise eine voneinander abweichende Länge und/oder eine voneinander abweichende Breite und/oder eine voneinander abweichende Dicke und/oder eine voneinander abweichende Oberflächenstruktur und/oder eine voneinander abweichende Topologie auf. Unter Topologie ist hierbei ein Verlegemuster der betreffenden Wärmeübertragungsstrecke a, b beispielsweise auf einer Leiterplatte 3 zu verstehen, wie in Figur 2 gezeigt. Je größer die Länge und/oder je geringer die Breite und/oder die Dicke der jeweiligen Wärmeübertragungsstrecke a, b ist, desto geringer ist ihre Wärmeleitfähigkeit, d. h. desto höher ist ihr Wärmewiderstand.

Die Topologie hat dabei ebenfalls einen Einfluss auf die Länge der jeweiligen Wärmeübertragungsstrecke a, b. Beispielsweise ist die in Figur 2 dargestellte erste Wärmeübertragungsstrecke a besonders lang, da sie mäanderförmig zwischen einem ersten Anschluss 4 einer im Folgenden noch näher beschriebenen Umschalteinheit 5 und dem zweiten Temperatursensor 2 verlegt ist, und weist daher eine geringere Wärmeleitfähigkeit und somit einen höheren Wärmewiderstand $R_a$ auf als die in Figur 2 gezeigte zweite Wärmeübertragungsstrecke b, welche in direkter gerader Linie zwischen einem zweiten Anschluss 6 der Umschalteinheit 5 und dem zweiten Temperatursensor 2 verlegt ist und somit kürzer ist. Des Weiteren ist die zweite Wärmeübertragungsstrecke b sehr viel breiter als die erste Wärmeübertragungsstrecke a, so dass der Unterschied zwischen deren Wärmewiderständen $R_a$, $R_b$ dadurch zusätzlich vergrößert ist. Die erste Wärmeübertragungsstrecke a ist im in Figur 2 dargestellten Beispiel auf einer Rückseite der Leiterplatte 3 verlegt und daher gestrichelt dargestellt.

Die Vorrichtung V umfasst des Weiteren die bereits erwähnte Umschalteinheit 5 zum Umschalten zwischen der ersten Wärmeübertragungsstrecke a und der zweiten Wärmeübertragungsstrecke b. Auf diese Weise ist der zweite Temperatursensor 2, abhängig von einer jeweiligen Schaltstellung der Umschalteinheit 5, entweder über die erste Wärmeübertragungsstrecke a oder über die zweite Wärmeübertragungsstrecke b mit dem ersten Temperatursensor 1 thermisch gekoppelt und über diesen ersten Temperatursensor 1 mit der Wärmequelle x thermisch gekoppelt, wie in Figur 1 gezeigt. D. h. wenn der erste Temperatursensor 1 mit der Wärmequelle x thermisch gekoppelt ist und der zweite Temperatursensor 2 entweder über die erste Wärmeübertragungsstrecke a oder über die zweite Wärmeübertragungsstrecke b mit dem ersten Temperatursensor 1 thermisch gekoppelt ist, so ist der zweite Temperatursensor 2 über den ersten Temperatursensor 1 ebenfalls mit der Wärmequelle x thermisch gekoppelt. Eine thermische Kopplung des zweiten Temperatursensors 2 mit der Wärmequelle x unter Umgehung des ersten Temperatursensors 1 sollte so gering wie möglich sein. Dies ist durch die Anordnung der Vorrichtung V beispielsweise in einem jeweiligen Messgerät, zum Beispiel in einem Heizkostenverteiler oder Wärmemengenmesser, sicherzustellen. In Figur 2 ist die Vorrichtung V noch nicht mit der Wärmequelle x gekoppelt, sondern mit dieser koppelbar.

Ist die Vorrichtung V mit der Wärmequelle x gekoppelt, so fließt ein Quellenwärmestrom Q über einen im Allgemeinen unbekannten Wärmewiderstand $R_x$ zum ersten Temperatursensor 1. Ist der zweite Temperatursensor 2 über die erste Wärmeübertragungsstrecke a mit dem ersten Temperatursensor 1 thermisch gekoppelt, so fließt ein erster Wärmestrom $\dot{Q}a$ über den unbekannten Wärmewiderstand $R_x$ und die erste Wärmeübertragungsstrecke a mit dem ersten Wärmewiderstand $R_a$. Ist der zweite Temperatursensor 2 über die zweite Wärmeübertragungsstrecke b mit dem ersten Temperatursensor 1 thermisch gekoppelt, so fließt ein zweiter Wärmestrom Qb über den unbekannten Wärmewiderstand $R_x$ und die zweite Wärmeübertragungsstrecke b mit dem zweiten Wärmewiderstand $R_b$. Das Umschalten zwischen den Wärmeübertragungsstrecken a, b erfolgt, wie bereits erläutert, mittels der Umschalteinheit 5.

In einem Verfahren zur Temperaturerfassung mittels der Vorrichtung V werden mit den unterschiedlichen Wärmewiderständen $R_a$, $R_b$ zwischen dem ersten Temperatursensor 1 und dem zweiten Temperatursensor 2 jeweils die Temperaturwerte $T_1$, $T_2$, $T'_1$, $T'_2$ mittels des ersten Temperatursensors 1 und mittels des zweiten Temperatursensors 2 erfasst und aus den erfassten Temperaturwerten $T_1$, $T_2$, $T'_1$, $T'_2$ wird die Temperatur $T_x$ der Wärmequelle x, d. h. die wahre Grenzflächentemperatur der Wärmequelle x, berechnet.

D. h. es wird zunächst ein erster Temperaturwert $T_1$ mittels des ersten Temperatursensors 1 und ein zweiter Temperaturwert $T_2$ mittels des zweiten Temperatursensors 2 erfasst, wobei die beiden Temperatursensoren 1, 2 über die erste Wärmeübertragungsstrecke a miteinander thermisch gekoppelt sind, wie in Figur 1 gezeigt. Danach wird mittels der Umschalteinheit 5 von der ersten Wärmeübertragungsstrecke a auf die zweite Wärmeübertragungsstrecke b umgeschaltet, so dass dann die beiden Temperatursensoren 1, 2 über die zweite Wärmeübertragungsstrecke b miteinander thermisch gekoppelt sind. Dann wird ein dritter Temperaturwert $T'_1$ mittels des ersten Temperatursensors 1 und ein vierter Temperaturwert $T'_2$ mittels des zweiten Temperatursensors 2 erfasst.

Nachdem die Temperaturwerte $T_1$, $T_2$, $T'_1$, $T'_2$ auf die geschilderte Weise erfasst wurden, wird mittels der Gleichung [1], den erfassten Temperaturwerten $T_1$, $T_2$, $T'_1$, $T'_2$ und den bekannten Wärmewiderständen $R_a$, $R_b$ der beiden Wärmeübertragungstrecken a, b die wahre, Temperatur $T_x$ der Wärmequelle x ermittelt, d. h. die wahre Grenzflächentemperatur der Wärmequelle x.

$$T_x = \frac{T_1 * \Delta T'_{12} * R_a - T'_1 * \Delta T_{12} * R_b}{\Delta T'_{12} * R_a - \Delta T_{12} * R_b} \qquad [1]$$

$\Delta T_{12}$ ist die Differenz der mittels der beiden Temperatursensoren 1, 2 erfassten Temperaturwerte $T_1$, $T_2$ mit dem ersten Wärmewiderstand $R_a$ zwischen dem ersten Temperatursensor 1 und dem zweiten Temperatursensor 2 und $\Delta T'_{12}$ ist die Differenz der mittels der beiden Temperatursensoren 1, 2 erfassten Temperaturwerte $T'_1$, $T'_2$ mit dem vom ersten Wärmewiderstand $R_a$ verschiedenen zweiten Wärmewiderstand $R_b$ zwischen dem ersten Temperatursensor 1 und dem zweiten Temperatursensor 2.

Diese Gleichung [1] ergibt sich aus Figur 1 gemäß der folgenden Berechnung.

Sind die beiden Temperatursensoren 1, 2 über die erste Wärmeübertragungsstrecke a miteinander thermisch gekoppelt, wie in Figur 1 gezeigt, so gilt:

$$\dot{Q}a = \frac{T_1 - T_2}{R_a} \qquad\qquad [2]$$

und

$$\dot{Q}a = \frac{T_x - T_1}{R_x} \qquad\qquad [3]$$

Sind die beiden Temperatursensoren 1, 2 über die zweite Wärmeübertragungsstrecke b miteinander thermisch gekoppelt, d. h. nach dem Umschalten mittels der Umschalteinheit 5 auf die zweite Wärmeübertragungsstrecke b, so gilt:

$$\dot{Q}b = \frac{T'_1 - T'_2}{R_b} \qquad\qquad [4]$$

und

$$\dot{Q}b = \frac{T_x - T'_1}{R_x} \qquad\qquad [5]$$

Aus den Gleichungen [2] und [3] folgt:

$$\dot{Q}a = \frac{T_1 - T_2}{R_a} = \frac{T_x - T_1}{R_x} \qquad\qquad [6]$$

Aus den Gleichungen [4] und [5] folgt:

$$\dot{Q}b = \frac{T'_1 - T'_2}{R_b} = \frac{T_x - T'_1}{R_x} \qquad\qquad [7]$$

Die Gleichung [6] umgestellt nach dem unbekannten Wärmewiderstand $R_x$ ergibt:

$$R_x = \frac{T_x - T_1}{T_1 - T_2} * R_a \qquad\qquad [8]$$

Die Gleichung [7] umgestellt nach dem unbekannten Wärmewiderstand $R_x$ ergibt:

$$R_x = \frac{T_x - T'_1}{T'_1 - T'_2} * R_b \qquad\qquad [9]$$

Aus den Gleichungen [8] und [9] folgt:

$$\frac{T_x - T_1}{T_1 - T_2} * R_a = \frac{T_x - T'_1}{T'_1 - T'_2} * R_b \qquad\qquad [10]$$

Aus Gleichung [10] folgt:

$$(T_x - T_1) * \left(T_1' - T_2'\right) * R_a = \left(T_x - T_1'\right) * (T_1 - T_2) * R_b \qquad [11]$$

Setzt man in Gleichung [11] nun

$$\Delta T_{12}' = T_1' - T_2' \qquad [12]$$

sowie

$$\Delta T_{12} = T_1 - T_2 \qquad [13]$$

und löst die Klammern auf, so ergibt dies

$$T_x * \Delta T_{12}' * R_a - T_1 * \Delta T_{12}' * R_a = T_x * \Delta T_{12} * R_b - T_1' * \Delta T_{12} * R_b \qquad [14]$$

Daraus folgt:

$$T_x * (\Delta T_{12}' * R_a - \Delta T_{12} * R_b) = T_1 * \Delta T_{12}' * R_a - T_1' * \Delta T_{12} * R_b \qquad [15]$$

Umgestellt nach der Temperatur $T_x$ der Wärmequelle x ergibt dies die oben bereits genannte Gleichung [1]:

$$T_x = \frac{T_1 * \Delta T_{12}' * R_a - T_1' * \Delta T_{12} * R_b}{\Delta T_{12}' * R_a - \Delta T_{12} * R_b} \qquad [1]$$

Somit ist die Temperatur $T_x$ der Wärmequelle x, wie oben bereits geschildert, mittels den erfassten Temperaturwerten $T_1$, $T_2$, $T'_1$, $T'_2$ und den bekannten Wärmewiderständen $R_a$, $R_b$ der beiden Wärmeübertragungstrecken a, b zu ermitteln.

In der schon angesprochenen Figur 2 ist schematisch eine Ausführungsform der Vorrichtung V zur Temperaturerfassung dargestellt, wobei die Komponenten, wie bereits beschrieben, auf einer Leiterplatte 3 angeordnet sind. Die Vorrichtung V ist in einem hier nicht näher dargestellten übergeordneten Messgerät, beispielsweise in einem Heizkostenverteiler oder Wärmemengenmesser, zweckmäßigerweise derart angeordnet, dass eine möglichst gute thermische Kopplung einer Wärmequellenkopplungsseite 7 der Leiterplatte 3 mit der zu messenden Wärmequelle x ermöglicht ist. Auf diese Weise ist, wenn das übergeordnete Messgerät an der Wärmequelle x angeordnet ist, die Wärmequellenkopplungsseite 7 der Leiterplatte 3 der Vorrichtung V optimiert mit der Wärmequelle x thermisch verbunden. Zweckmäßigerweise ist der erste Temperatursensor 1 im Bereich dieser Wärmequellenkopplungsseite 7 auf der Leiterplatte 3 positioniert.

Die Vorrichtung V weist einen ersten elektrischen Sensorkontakt 12 zum ersten Temperatursensor 1 auf. Der erste Temperatursensor 1 ist mit einem dritten Anschluss 8 der Umschalteinheit 5 thermisch und zweckmäßigerweise auch elektrisch gekoppelt. Die Umschalteinheit 5 weist neben dem ersten Anschluss 4 und dem zweiten Anschluss 6 noch einen Masseanschluss 9, einen Steuerungsanschluss 11 und einen Spannungsanschluss 15 auf. Ein elektrischer Anschluss 10 eines zweiten elektrischen Sensorkontaktes 13 des zweiten Temperatursensors 2 ist als eine mäanderförmige Anschlussleitung ausgeführt, wodurch deren thermische Leitfähigkeit erheblich reduziert ist. Dadurch ist der zweite Temperatursensor 2 gegenüber anderen Wärmequellen thermisch entkoppelt, insbesondere gegenüber dem Referenzmedium und dessen Referenztemperatur. Bei einer Anordnung der Vorrichtung V beispielsweise in einem Messgerät, zum Beispiel in einem Heizkostenverteiler, bildet das Innere des Messgerätes das Referenzmedium. Durch die dargestellte Ausbildung des elektrischen Anschlusses 10 ist der zweite Temperatursensor 2 daher insbesondere von der Referenztemperatur im Inneren des Messgerätes thermisch entkoppelt. Dieser als mäanderförmige Anschlussleitung ausgebildete elektrische Anschluss 10 bildet eine dritte Wärmeübertragungsstrecke c, welche allerdings, wie beschrieben, eine möglichst geringe thermische Leitfähigkeit aufweist, um eine möglichst gute thermische Entkopplung gegenüber anderen Wärmequellen sicherzustellen.

Eine solche thermische Entkopplung von anderen Wärmequellen ist zweckmäßigerweise auch für alle anderen elektrischen Sensoranschlüsse, d. h. im hier dargestellten Beispiel für den ersten elektrischen Sensorkontakt 12 des ersten Temperatursensors 1 und für den gemeinsamen elektrischen Sensorkontakt 14 der beiden Temperatursensoren 1, 2 vorgesehen. D. h. vorzugsweise führt auch zu diesen elektrischen Sensorkontakten 12, 14 jeweils ein derartiger beispielsweise als mäanderförmige Anschlussleitung ausgebildeter elektrischer Anschluss 10. Um die Übersichtlichkeit der Figur 2 nicht zu vermindern, wurden diese weiteren elektrischen Anschlüsse 10 zum ersten elektrischen Sensorkontakt 12 des ersten Temperatursensors 1 und zum gemeinsamen elektrischen Sensorkontakt 14 jedoch nicht dargestellt.

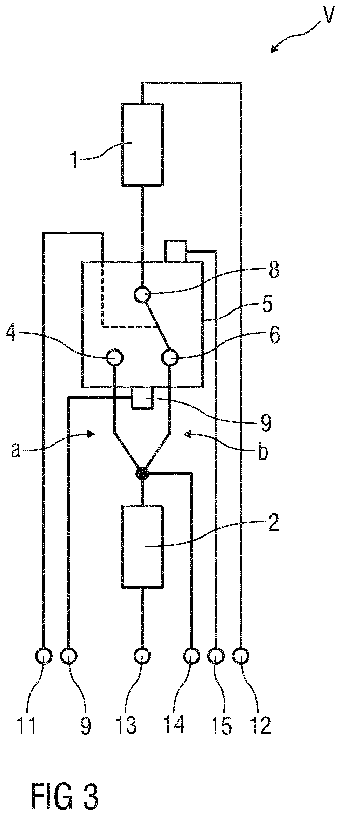

Figur 3 zeigt schematisch ein Schaltbild der Vorrichtung V zur Temperaturerfassung. Die Schaltung weist neben den bereits bekannten Komponenten den schon beschriebenen Steuerungsanschluss 11 zur Ansteuerung der Umschalteinheit 5 auf, des Weiteren den schon beschriebenen ersten elektrischen Sensorkontakt 12 zum ersten Temperatursensor 1 und den schon beschriebenen zweiten elektrischen Sensorkontakt 13 zum zweiten Temperatursensor 2, einen gemeinsamen elektrischen Sensorkontakt 14 sowie den schon beschriebenen Spannungsanschluss 15 für die Umschalteinheit 5.

Mittels der Vorrichtung V, genauer gesagt mittels deren beider Temperatursensoren 1, 2 und den zwei Wärmeübertragungsstrecken a, b mit unterschiedlichen bekannten Wärmewiderständen $R_a$, $R_b$ zwischen den Temperatursensoren 1, 2 und der Umschalteinheit 5, welche zweckmäßigerweise mittels einer Steuerungseinheit, beispielsweise mittels einer Steuerlogik, gesteuert wird, kann somit eine Quelltemperatur eines Wärmeflusses ermittelt werden, d. h. die korrekte, wahre Temperatur $T_x$ der Wärmequelle x. Die Steuerlogik, welche beispielsweise als ein Mikrokontroller ausgebildet ist, aktiviert zunächst die erste bekannte Wärmeübertragungsstrecke a zwischen den beiden Temperatursensoren 1, 2, welche den ersten bekannten Wärmewiderstand $R_a$ aufweist, und es werden die Temperaturwerte $T_1$, $T_2$ der beiden Temperatursensoren 1, 2 erfasst. Anschließend wird mittels der Umschalteinheit 5, gesteuert durch die Steuerlogik, beispielsweise durch den Mikrokontroller, die zweite bekannte Wärmeübertragungsstrecke b zwischen den beiden Temperatursensoren 1, 2 aktiviert, die den zweiten bekannten Wärmewiderstand $R_b$ aufweist. Es werden nun wieder die Temperaturwerte $T'_1$, $T'_2$ der beiden Temperatursensoren 1, 2 erfasst. Aus den erfassten Temperaturwerten $T_1$, $T_2$, $T'_1$, $T'_2$ und den bekannten Wärmewiderständen $R_a$, $R_b$ wird nun gemäß der obigen Gleichung [1] die unbekannte Quell- bzw. Senkentemperatur berechnet, d. h. die Temperatur $T_x$, wobei diese Temperatur $T_x$ die wahre Grenzflächentemperatur der Wärmequelle x ist.

BEZUGSZEICHENLISTE

| | |
|---|---|
| 1 | erster Temperatursensor |
| 2 | zweiter Temperatursensor |
| 3 | Leiterplatte |
| 4 | erster Anschluss |
| 5 | Umschalteinheit |
| 6 | zweiter Anschluss |
| 7 | Wärmequellenkopplungsseite |
| 8 | dritter Anschluss |
| 9 | Masseanschluss |
| 10 | elektrischer Anschluss |
| 11 | Steuerungsanschluss |
| 12 | erster elektrischer Sensorkontakt |
| 13 | zweiter elektrischer Sensorkontakt |
| 14 | gemeinsamer elektrischer Sensorkontakt |
| 15 | Spannungsanschluss |
| a | erste Wärmeübertragungsstrecke |
| b | zweite Wärmeübertragungsstrecke |
| c | dritte Wärmeübertragungsstrecke |
| $\dot{Q}$ | Quellenwärmestrom |
| $\dot{Q}a$ | erster Wärmestrom |
| $\dot{Q}b$ | zweiter Wärmestrom |
| $R_a$ | erster Wärmewiderstand |
| $R_b$ | zweiter Wärmewiderstand |
| $R_x$ | unbekannter Wärmewiderstand |
| $T_1$ | erster Temperaturwert |
| $T_2$ | zweiter Temperaturwert |
| $T'_1$ | dritter Temperaturwert |

$T'_2$     vierter Temperaturwert
$T_x$     Temperatur der Wärmequelle
V     Vorrichtung
x     Wärmequelle

**Patentansprüche**

1. Vorrichtung (V) zur Temperaturerfassung, umfassend zumindest einen ersten Temperatursensor (1) und einen zweiten Temperatursensor (2), wobei der erste Temperatursensor (1) mit einer Wärmequelle (x), deren Temperatur ($T_x$) zu ermitteln ist, thermisch koppelbar ist, wobei die Vorrichtung (V)

   - eine variable Wärmeübertragungsstrecke mit einem veränderbaren Wärmewiderstand umfasst, über welche der zweite Temperatursensor (2) mit dem ersten Temperatursensor (1) thermisch koppelbar oder gekoppelt ist, oder
   - eine erste Wärmeübertragungsstrecke (a) zur thermischen Kopplung des zweiten Temperatursensors (2) mit dem ersten Temperatursensor (1), welche einen ersten Wärmewiderstand ($R_a$) aufweist, und eine zweite Wärmeübertragungsstrecke (b) zur thermischen Kopplung des zweiten Temperatursensors (2) mit dem ersten Temperatursensor (1), welche einen von dem ersten Wärmewiderstand ($R_a$) verschiedenen zweiten Wärmewiderstand ($R_b$) aufweist, sowie eine Umschalteinheit (5) zum Umschalten zwischen der ersten Wärmeübertragungsstrecke (a) und der zweiten Wärmeübertragungsstrecke (b) umfasst, so dass der zweite Temperatursensor (2) über die erste Wärmeübertragungsstrecke (a) oder über die zweite Wärmeübertragungsstrecke (b) mit dem ersten Temperatursensor (1) thermisch koppelbar oder gekoppelt ist.

2. Vorrichtung (V) nach Anspruch 1,
   **dadurch gekennzeichnet, dass** die erste Wärmeübertragungsstrecke (a) aus einem anderen Material ausgebildet ist als die zweite Wärmeübertragungsstrecke (b).

3. Vorrichtung (V) nach Anspruch 1 oder 2,
   **dadurch gekennzeichnet, dass** die erste und die zweite Wärmeübertragungsstrecke (a, b) eine voneinander abweichende Länge und/oder eine voneinander abweichende Breite und/oder eine voneinander abweichende Dicke und/oder eine voneinander abweichende Oberflächenstruktur und/oder eine voneinander abweichende Topologie aufweisen.

4. Vorrichtung (V) nach einem der Ansprüche 1 bis 3,
   **dadurch gekennzeichnet, dass** ein elektrischer Anschluss (10) zumindest eines elektrischen Sensorkontaktes (12, 13, 14) derart ausgebildet ist, dass der jeweilige Temperatursensor (1, 2) von anderen Wärmequellen thermisch entkoppelt ist.

5. Verfahren zur Temperaturerfassung mittels einer Vorrichtung (V) nach einem der Ansprüche 1 bis 4, wobei der erste Temperatursensor (1) mit der Wärmequelle (x), deren Temperatur ($T_x$) zu ermitteln ist, thermisch gekoppelt ist, wobei mit unterschiedlichen Wärmewiderständen ($R_a$, $R_b$) zwischen dem ersten Temperatursensor (1) und dem zweiten Temperatursensor (2) jeweils ein Temperaturwert ($T_1$, $T_2$, $T'_1$, $T'_2$) der Wärmequelle (x) mittels des ersten Temperatursensors (1) und mittels des zweiten Temperatursensors (2) erfasst wird und aus den erfassten Temperaturwerten ($T_1$, $T_2$, $T'_1$, $T'_2$) eine Temperatur ($T_x$) der Wärmequelle (x) berechnet wird.

6. Verfahren nach Anspruch 5,
   **dadurch gekennzeichnet, dass** ein Temperaturwert ($T_1$, $T_2$) der Wärmequelle (x) mittels des ersten Temperatursensors (1) und mittels des zweiten Temperatursensors (2) erfasst wird, danach der Wärmewiderstand der variablen Wärmeübertragungsstrecke verändert wird und erneut ein Temperaturwert ($T'_1$, $T'_2$) der Wärmequelle (x) mittels des ersten Temperatursensors (1) und mittels des zweiten Temperatursensors (2) erfasst wird.

7. Verfahren nach Anspruch 5,
   **dadurch gekennzeichnet, dass** ein Temperaturwert ($T_1$, $T_2$) der Wärmequelle (x) mittels des ersten Temperatursensors (1) und mittels des zweiten Temperatursensors (2) erfasst wird, wobei die beiden Temperatursensoren (1,2) über die erste Wärmeübertragungsstrecke (a) miteinander thermisch gekoppelt sind, und ein Temperaturwert ($T'_1$, $T'_2$) der Wärmequelle (x) mittels des ersten Temperatursensors (1) und mittels des zweiten Temperatursensors (2) erfasst wird, wobei die beiden Temperatursensoren (1, 2) über die zweite Wärmeübertragungsstrecke (b) miteinander thermisch gekoppelt sind.

8. Verfahren nach Anspruch 7,
**dadurch gekennzeichnet, dass** mittels der Umschalteinheit (5) zwischen den Wärmeübertragungsstrecken (a, b) umgeschaltet wird, um sowohl einen Temperaturwert ($T_1$, $T_2$) der Wärmequelle (x) mittels des ersten Temperatursensors (1) und mittels des zweiten Temperatursensors (2) zu erfassen, wenn die beiden Temperatursensoren (1, 2) über die erste Wärmeübertragungsstrecke (a) miteinander thermisch gekoppelt sind, als auch einen Temperaturwert ($T'_1$, $T'_2$) der Wärmequelle (x) mittels des ersten Temperatursensors (1) und mittels des zweiten Temperatursensors (2) zu erfassen, wenn die beiden Temperatursensoren (1, 2) über die zweite Wärmeübertragungsstrecke (b) miteinander thermisch gekoppelt sind.

9. Verwendung einer Vorrichtung (V) nach einem der Ansprüche 1 bis 4 in einem Heizkostenverteiler.

10. Verwendung einer Vorrichtung (V) nach einem der Ansprüche 1 bis 4 in einem Wärmemengenmesser.

**Claims**

1. Apparatus (V) for temperature detection, comprising at least a first temperature sensor (1) and a second temperature sensor (2), wherein the first temperature sensor (1) is thermally couplable to a heat source (x), the temperature ($T_x$) of which is to be ascertained, wherein the apparatus (V)

   - comprises a variable heat transfer section with a variable thermal resistance, by way of which variable heat transfer section the second temperature sensor (2) is thermally couplable or coupled to the first temperature sensor (1), or
   - comprises a first heat transfer section (a) for thermally coupling the second temperature sensor (2) to the first temperature sensor (1), which first heat transfer section has a first thermal resistance ($R_a$), and a second heat transfer section (b) for thermally coupling the second temperature sensor (2) to the first temperature sensor (1), which second heat transfer section has a second thermal resistance ($R_b$) which is different from the first thermal resistance ($R_a$), and also a switchover unit (5) for switching over between the first heat transfer section (a) and the second heat transfer section (b), so that the second temperature sensor (2) is thermally couplable or coupled to the first temperature sensor (1) by way of the first heat transfer section (a) or by way of the second heat transfer section (b).

2. Apparatus (V) according to Claim 1,
**characterized in that** the first heat transfer section (a) is formed from a different material than the second heat transfer section (b).

3. Apparatus (V) according to Claim 1 or 2,
**characterized in that** the first and the second heat transfer section (a, b) have a length which differs from one another and/or a width which differs from one another and/or a thickness which differs from one another and/or a surface structure which differs from one another and/or a topology which differs from one another.

4. Apparatus (V) according to one of Claims 1 to 3,
**characterized in that** an electrical connection (10) of at least one electrical sensor contact (12, 13, 14) is formed in such a way that the respective temperature sensor (1, 2) is thermally decoupled from other heat sources.

5. Method for temperature detection by means of an apparatus (V) according to one of Claims 1 to 4, wherein the first temperature sensor (1) is thermally coupled to the heat source (x), the temperature ($T_x$) of which is to be ascertained, wherein, with different thermal resistances ($R_a$, $R_b$) between the first temperature sensor (1) and the second temperature sensor (2), a respective temperature value ($T_1$, $T_2$, $T'_1$, $T'_2$) of the heat source (x) is detected by means of the first temperature sensor (1) and by means of the second temperature sensor (2), and a temperature ($T_x$) of the heat source (x) is calculated from the detected temperature values ($T_1$, $T_2$, $T'_1$, $T'_2$).

6. Method according to Claim 5,
**characterized in that** a temperature value ($T_1$, $T_2$) of the heat source (x) is detected by means of the first temperature sensor (1) and by means of the second temperature sensor (2), the thermal resistance of the variable heat transfer section is then changed and a temperature value ($T'_1$, $T'_2$) of the heat source (x) is once again recorded by means of the first temperature sensor (1) and by means of the second temperature sensor (2).

7. Method according to Claim 5,
**characterized in that** a temperature value ($T_1$, $T_2$) of the heat source (x) is detected by means of the first temperature sensor (1) and by means of the second temperature sensor (2), wherein the two temperature sensors (1, 2) are thermally coupled to one another by way of the first heat transfer section (a), and a temperature value ($T'_1$, $T'_2$) of the heat source (x) is detected by means of the first temperature sensor (1) and by means of the second temperature sensor (2), wherein the two temperature sensors (1, 2) are thermally coupled to one another by way of the second heat transfer section (b).

8. Method according to Claim 7,
**characterized in that** the switchover unit (5) is used to switch over between the heat transfer sections (a, b) in order to detect both a temperature value ($T_1$, $T_2$) of the heat source (x) by means of the first temperature sensor (1) and by means of the second temperature sensor (2) when the two temperature sensors ($T_1$, $T_2$) are thermally coupled to one another by way of the first heat transfer section (a) and also to detect a temperature value ($T'_1$, $T'_2$) of the heat source (x) by means of the first temperature sensor (1) and by means of the second temperature sensor (2) when the two temperature sensors (1, 2) are thermally coupled to one another by way of the second heat transfer section (b).

9. Use of an apparatus (V) according to one of Claims 1 to 4 in a heat cost allocator.

10. Use of an apparatus (V) according to one of Claims 1 to 4 in a heat meter.

**Revendications**

1. Dispositif (V) pour la détection de la température, comprenant au moins un premier capteur de température (1) et un deuxième capteur de température (2), le premier capteur de température (1) pouvant être accouplé thermiquement à une source de chaleur (x) dont la température ($T_x$) doit être déterminée, le dispositif (V) comprenant

- une section de transfert thermique variable avec une résistance thermique variable, par le biais de laquelle le deuxième capteur de température (2) peut être ou est accouplé thermiquement au premier capteur de température (1), ou
- une première section de transfert thermique (a) pour l'accouplement thermique du deuxième capteur de température (2) au premier capteur de température (1), qui présente une première résistance thermique ($R_a$) et une deuxième section de transfert thermique (b) pour l'accouplement thermique du deuxième capteur de température (2) au premier capteur de température (1), qui présente une deuxième résistance thermique ($R_b$) différente de la première résistance thermique ($R_a$), ainsi qu'une unité de commutation (5) pour commuter entre la première section de transfert thermique (a) et la deuxième section de transfert thermique (b), de telle sorte que le deuxième capteur de température (2) puisse être accouplé ou soit accouplé thermiquement par le biais de la première section de transfert thermique (a) ou par le biais de la deuxième section de transfert thermique (b) au premier capteur de température (1).

2. Dispositif (V) selon la revendication 1,
**caractérisé en ce que** la première section de transfert thermique (a) est constituée d'un autre matériau que la deuxième section de transfert thermique (b).

3. Dispositif (V) selon la revendication 1 ou 2,
**caractérisé en ce que** la première et la deuxième section de transfert thermique (a, b) présentent une longueur différente l'une de l'autre et/ou une largeur différente l'une de l'autre et/ou une épaisseur différente l'une de l'autre et/ou une structure de surface différente l'une de l'autre et/ou une topologie différente l'une de l'autre.

4. Dispositif (V) selon l'une quelconque des revendications 1 à 3, **caractérisé en ce qu'**un raccord électrique (10) d'au moins un contact électrique de capteur (12, 13, 14) est réalisé de telle sorte que le capteur de température respectif (1, 2) soit désaccouplé thermiquement d'autres sources de chaleur.

5. Procédé de détection de la température au moyen d'un dispositif (V) selon l'une quelconque des revendications 1 à 4, dans lequel le premier capteur de température (1) est accouplé thermiquement à la source de chaleur (x) dont

la température ($T_x$) doit être déterminée, une valeur de température ($T_1$, $T_2$, $T'_1$, $T'_2$) de la source de chaleur (x) étant détectée respectivement avec des résistances thermiques différentes ($R_a$, $R_b$) entre le premier capteur de température (1) et le deuxième capteur de température (2), au moyen du premier capteur de température (1) et au moyen du deuxième capteur de température (2), et une température ($T_x$) de la source de chaleur (x) étant calculée à partir des valeurs de température ($T_1$, $T_2$, $T'_1$, $T'_2$) détectées.

6. Procédé selon la revendication 5,
**caractérisé en ce qu'**une valeur de température ($T_1$, $T_2$) de la source de chaleur (x) est détectée au moyen du premier capteur de température (1) et au moyen du deuxième capteur de température (2), ensuite la résistance thermique de la section de transfert thermique variable est modifiée et une valeur de température ($T'_1$, $T'_2$) de la source de chaleur (x) est à nouveau détectée au moyen du premier capteur de température (1) et au moyen du deuxième capteur de température (2).

7. Procédé selon la revendication 5,
**caractérisé en ce qu'**une valeur de température ($T_1$, $T_2$) de la source de chaleur (x) est détectée au moyen du premier capteur de température (1) et au moyen du deuxième capteur de température (2), les deux capteurs de température (1, 2) étant accouplés thermiquement l'un à l'autre par le biais de la première section de transfert thermique (a) et une valeur de température ($T'_1$, $T'_2$) de la source de chaleur (x) est détectée au moyen du premier capteur de température (1) et au moyen du deuxième capteur de température (2), les deux capteurs de température (1, 2) étant accouplés thermiquement l'un à l'autre par le biais de la deuxième section de transfert thermique (b).

8. Procédé selon la revendication 7,
**caractérisé en ce qu'**au moyen de l'unité de commutation (5), on peut commuter entre les sections de transfert thermique (a, b), afin de détecter à la fois une valeur de température ($T_1$, $T_2$) de la source de chaleur (x) au moyen du premier capteur de température (1) et au moyen du deuxième capteur de température (2), lorsque les deux capteurs de température (1, 2) sont accouplés thermiquement l'un à l'autre par le biais de la première section de transfert thermique (a), et une valeur de température ($T'_1$, $T'_2$) de la source de chaleur (x) au moyen du premier capteur de température (1) et au moyen du deuxième capteur de température (2), lorsque les deux capteurs de température (1, 2) sont accouplés thermiquement l'un à l'autre par le biais de la deuxième section de transfert thermique (b).

9. Utilisation d'un dispositif (V) selon l'une quelconque des revendications 1 à 4, dans un répartiteur de chaleur.

10. Utilisation d'un dispositif (V) selon l'une quelconque des revendications 1 à 4, dans un analyseur thermique.

FIG 1

FIG 2

FIG 3

**IN DER BESCHREIBUNG AUFGEFÜHRTE DOKUMENTE**

**In der Beschreibung aufgeführte Patentdokumente**

- DE 19939757 A1

- JP 2013210325 A